# EUROPEAN PATENT APPLICATION

(11) **EP 4 811 352 A1**
(43) Date of publication of application: **23.09.2026**
(21) Application number: 24927388.9
(22) Date of filing: 30.12.2024
(51) Int. Cl.: G10L 15/22, G10L 15/04, G10L 15/16, G06F 3/04895, G06N 3/0475

(54) **ELECTRONIC DEVICE FOR PROCESSING USER SPEECH, OPERATING METHOD THEREOF, AND COMPUTER-READABLE RECORDING MEDIUM**

(30) Priority: 28.02.2024 KR 20240029003; 27.03.2024 KR 20240041802
(71) Applicant: Samsung Electronics Co., Ltd., Suwon-si, Gyeonggi-do 16677 (KR)
(72) Inventor: PARK, Sangmin, Suwon-si Gyeonggi-do 16677 (KR); SONG, Gajin, Suwon-si Gyeonggi-do 16677 (KR); KIM, Kyungtae, Suwon-si Gyeonggi-do 16677 (KR)
(74) Representative: Gulde & Partner
(86) International application number: PCT/KR2024/021477
(87) International publication number: WO 2025/183328

(57) **Abstract**

An electronic device for processing a user utterance, an operating method thereof, and a computer-readable recording medium are disclosed. The operating method of the electronic device, according to one embodiment, may comprise an operation of obtaining a user utterance. The operating method may comprise an operation of: generating a first prompt on the basis of the user utterance; generating a second prompt on the basis of first data for invoking a function of an application related to the first prompt; and generating a natural language-based response to the user utterance by using a first generative model (555) to process the second prompt.

## Description

### TECHNICAL FIELD

The following description relates to an electronic device for processing a user utterance, an operating method thereof, and a non-transitory computer-readable storage medium.

### BACKGROUND ART

A generative model is an artificial intelligence model capable of generating new data based on input data. A generative model may be used for a user utterance processing system such as a voice agent.

The above information may be presented as the related art to help with the understanding of the disclosure. No arguments or decisions are raised to whether any of the above description is applicable as the prior art related to the present disclosure.

### DISCLOSURE OF THE INVENTION

### TECHNICAL SOLUTIONS

An electronic device, according to an embodiment, may include at least one processor and memory storing instructions. The instructions, when executed by the at least one processor individually or collectively, may cause the electronic device to obtain a user utterance.

The instructions, when executed by the at least one processor individually or collectively, may cause the electronic device to generate a first prompt based on the user utterance.

The instructions, when executed by the at least one processor individually or collectively, may cause the electronic device to generate a second prompt based on first data for invoking a function of an application, which is related to the first prompt.

The instructions, when executed by the at least one processor individually or collectively, may cause the electronic device to generate a natural language-based response to the user utterance by processing the second prompt using a first generative model.

The first data may be generated based on processing the first prompt using a second generative model.

An operating method of an electronic device, according to an embodiment, may include obtaining a user utterance.

The operating method may include generating a first prompt based on the user utterance.

The operating method may include generating a second prompt based on first data for invoking a function of an application, which is related to the first prompt.

The operating method may include generating a natural language-based response to the user utterance by processing the second prompt using a first generative model.

The first data may be generated based on processing the first prompt using a second generative model.

According to an embodiment, a non-transitory computer-readable storage medium storing one or more computer programs may include instructions that cause a processor to perform the operating method.

### BRIEF DESCRIPTION OF DRAWINGS

With regard to the description of the drawings, the same or similar reference numerals may be used to refer to the same or similar components.
FIG. 1 is a block diagram illustrating an electronic device in a network environment, according to an embodiment.
FIG. 2 is a diagram illustrating a generative artificial intelligence system according to an embodiment.
FIG. 3 is a diagram illustrating a user utterance processing system according to an embodiment.
FIG. 4 is a diagram illustrating a final response provided by a user utterance processing system, according to an embodiment.
FIG. 5 is a diagram illustrating a user utterance processing system according to an embodiment.
FIG. 6 is a diagram illustrating an encoder according to an embodiment.
FIG. 7 is a diagram illustrating a prompt according to an embodiment.
FIG. 8 is a diagram illustrating an action according to an embodiment.
FIGS. 9 and 10 are diagrams illustrating a final response provided by a user utterance processing system, according to an embodiment.
FIGS. 11 and 12 are diagrams illustrating a final response provided by a user utterance processing system, according to an embodiment.
FIG. 13 is a diagram illustrating a final response provided by a user utterance processing system, according to an embodiment.
FIG. 14 is a flowchart illustrating the operations performed by an electronic device, according to an embodiment.

### MODE FOR CARRYING OUT THE INVENTION

Hereinafter, embodiments will be described in detail with reference to the accompanying drawings. When describing the embodiments with reference to the accompanying drawings, like reference numerals refer to like components and a repeated description related thereto will be omitted.

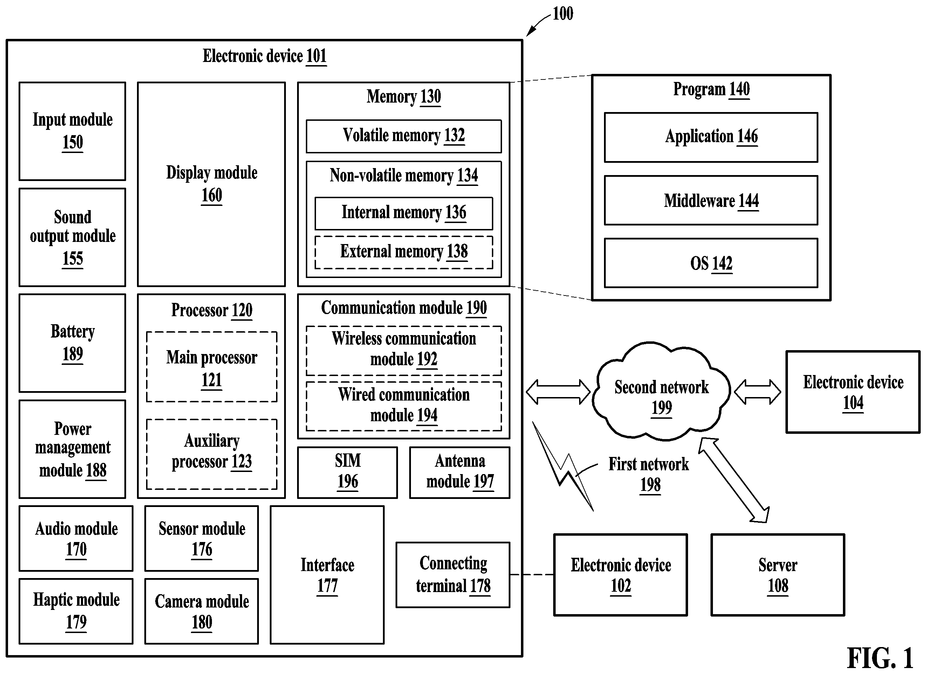

FIG. 1 is a block diagram illustrating an electronic device 101 in a network environment 100, according to an embodiment. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. According to an embodiment, the instructions stored in the memory 130, when executed by at least one processor (e.g., the main processor 121 and/or the auxiliary processor 123) individually or collectively, may cause the electronic device 101 to perform one or more operations. For example, the instructions stored in the memory 130 may be executed by a single processor (e.g., the main processor 121 or the auxiliary processor 123 such as a CP) or by a plurality of processors operating cooperatively (e.g., the main processor 121 and the auxiliary processor 123).

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150 or output the sound via the sound output module 155 or an external electronic device (e.g., the electronic device 102) (e.g., a speaker or headphone) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, ISPs, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a PCB, a RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-Things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

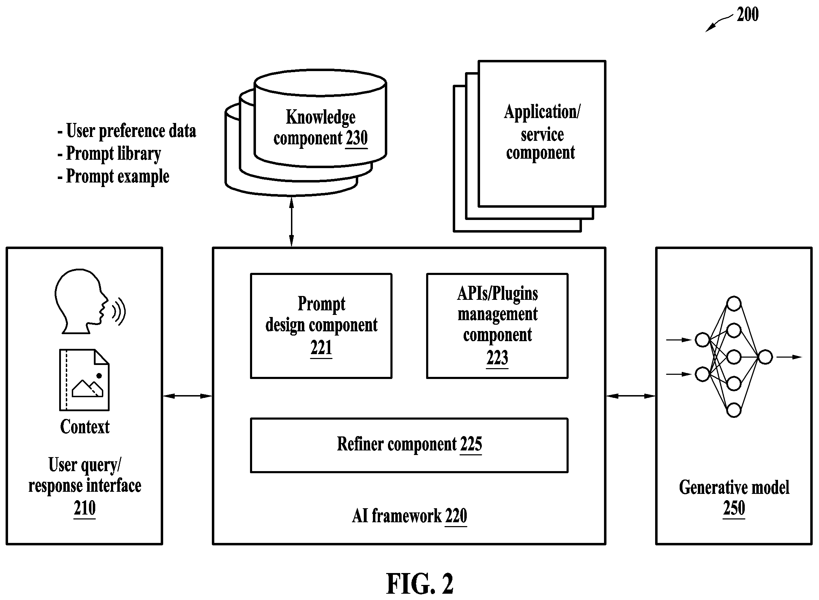

FIG. 2 is a diagram illustrating a generative artificial intelligence system (AI) according to an embodiment.

Referring to FIG. 2, according to an embodiment, a generative AI system 200 may be a program (e.g., a software module) implemented on an electronic device (e.g., the electronic device 101 of FIG. 1) and/or a server (e.g., the server 108 of FIG. 1).

According to an embodiment, a user query/response interface 210 may receive a user input. The user input may be an input of a type (or modality) such as natural language, images, audio, and/or videos. In addition, when the user input is transmitted, context information may also be transmitted. The context information may include various side information associated with a time point at which the user input is input to the generative AI system 200. For example, there may be side information such as application information that is currently being used by a user or location information of the user. Additionally, the user input may be an input of a type that is a mixture of the natural language, images, audio, videos, and/or context information described above. Furthermore, the user input may include a non-natural language input, such as selecting a menu.

According to an embodiment, the user query/response interface 210 may provide the user with an output of the generative AI system 200. The output may include a natural language-based response and/or specific content. The output may also include an action requested by the user.

According to an embodiment, an AI framework 220 may receive the user input. Based on the user input (e.g., a query of the user), the AI framework 220 may coordinate and/or control one or more components necessary to perform an operation corresponding to the intent of the user.

According to an embodiment, the user input received from the user query/response interface 210 may be transmitted to a prompt design component 221. Based on the user input, the prompt design component 221 may be used to generate a prompt that is suitable as an input of a generative model (e.g., a large language model (LLM) and/or a large multimodal model (LMM)).

According to an embodiment, the prompt design component 221 may be an AI component that uses a machine learning algorithm or a neural network. The prompt design component 221 may generate an improved prompt via training over time. The prompt design component 221 may access a knowledge component 230 to generate a prompt based on the user input. The knowledge component 230 may include user preference data, a prompt library, and/or a prompt example. The prompt design component 221 may provide the generated prompt to the generative model (e.g., an LLM and/or an LMM).

According to an embodiment, an APIs/Plugins management component 223 may communicate with an external information source based on a request for additional information when the user input is transmitted to the generative model.

According to an embodiment, the APIs/Plugins management component 223 may establish a communication channel for communicating with the outside of the generative AI system 200 via an application programming interface (API). The APIs/Plugins management component 223 may enable access to various data sources via the communication channel. The obtained information may be used to generate a prompt by the prompt design component 221 together with the user input or may be used as an input of a generative model 250.

According to an embodiment, when a final action corresponding to the user input, rather than an intermediate action, needs to be performed by an application or a service, the APIs/Plugins management component 223 may request the final action via the API.

According to an embodiment, a refiner component 225 may finely tune an output of the generative model 250. For example, the refiner component 225 may determine a relevance (e.g., a score) between the output (e.g., content) of the generative model 250 and the user input. For example, the refiner component 225 may determine whether the output includes biased information (e.g., selective information). For example, the refiner component 225 may determine whether the output includes harmful information (e.g., violent content or profanity).

According to an embodiment, the refiner component 225 may determine the degree of matching (e.g., a score) between the output of the generative model 250 and the user input (e.g., the intent of the user input). When the refiner component 225 determines that the output of the generative model 250 does not correspond to the user input, the refiner component 225 may modify the output to correspond to the user input.

According to an embodiment, the refiner component 225 may provide a hint (e.g., a hint for generating a prompt) to the user so that the user may obtain information corresponding to the intent of the user from the generative model 250.

According to an embodiment, the generative model 250 may refer to an AI neural network that generates new data (e.g., text, images, audio, or videos) based on the user input (e.g., a user utterance). The generative model 250 may include an image generation model and/or a language generation model.

According to an embodiment, the image generation model may include a generative adversarial network (GAN) and/or a variational autoencoder (VAE). An example of the image generation model may be a diffusion-based generative model having a structure of a VAE and a transformer.

According to an embodiment, the language generation model (e.g., ChatGPT) may be a model trained to generate the statistically most appropriate output based on an input. The language generation model may include an LMM. The LMM may identify various types of inputs, such as text, images, audio (e.g., speech), and/or videos, and generate new data corresponding to the input.

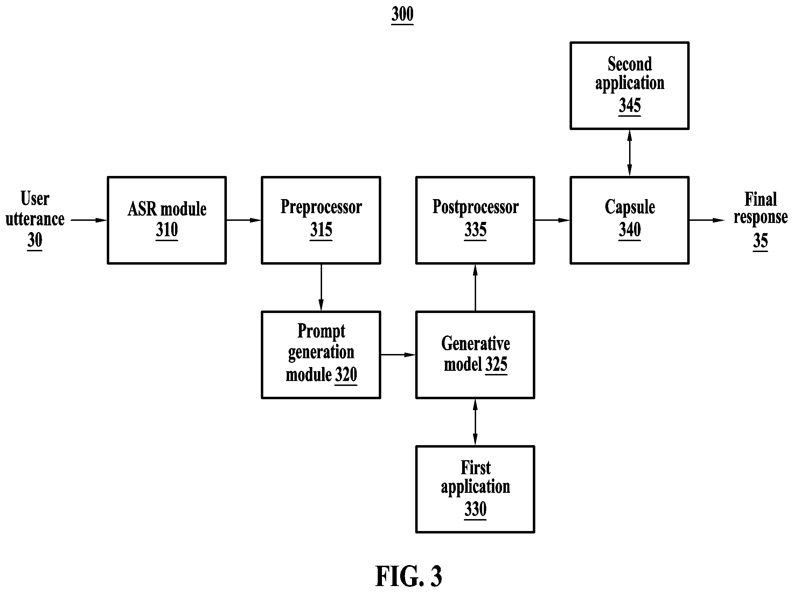

FIG. 3 is a diagram illustrating a user utterance processing system according to an embodiment.

Referring to FIG. 3, according to an embodiment, a user utterance processing system 300 may obtain a user utterance 30 (e.g., a speech utterance and/or a text utterance) and provide a final response 35 corresponding to the user utterance. For example, the user utterance processing system 300 may visually and/or audibly provide a user with the final response, "It's currently raining," to the user utterance, "Tell me the current weather."

According to an embodiment, the user utterance processing system 300 may include one or more components 310 to 345. The components 310 to 345 may be software modules implemented on an electronic device (e.g., the electronic device 101 of FIG. 1) or a server (e.g., the server 108 of FIG. 1). The components 310 to 345 are illustrated as examples to describe the user utterance processing system 300. Accordingly, the user utterance processing system 300 may include various variations of the components 310 to 345 as long as the operations of the user utterance processing system 300 described herein may be implemented. For example, two or more components may be combined, or one or more components may be added or omitted. Alternatively, the user utterance processing system 300 may further include one or more components among components (e.g., the components 210 to 250 of FIG. 2) of a generative AI system (e.g., the generative AI system 200 of FIG. 2).

According to an embodiment, the user utterance processing system 300 may include an automatic speech recognition (ASR) module 310, a preprocessor 315, a prompt generation module 320, a generative model 325 (e.g., the generative model 250 of FIG. 2), a first application 330, a postprocessor 335, a capsule 340, and a second application 345.

According to an embodiment, the ASR module 310 may convert a speech signal (e.g., an analog signal) into text data. When the user utterance is a text utterance, the operation of the ASR module 310 may be omitted.

According to an embodiment, the preprocessor 315 may perform preprocessing on the text data. For example, the preprocessor 315 may perform tokenization to split text into tokens (e.g., words, phrases, and/or symbols). In another example, the preprocessor 315 may remove unnecessary characters (e.g., characters such as '!' or '?') to generate the final response 35 from the text data.

According to an embodiment, the prompt generation module 320 may generate a prompt. The prompt may be data (e.g., text, JavaScript object notation (JSON), images, audio, and/or videos) provided to the generative model 325 to generate new data (e.g., a response). The prompt generation module 320 may use the text data corresponding to the user utterance together with a condition (e.g., a length or a writing style) related to the final response 35 to generate a prompt that the generative model 325 may understand.

According to an embodiment, the generative model 325 may generate a natural language-based response (e.g., text such as 'The weather is clear today') corresponding to the user utterance (e.g., "How is the weather today"). To generate the natural language-based response, the generative model 325 may obtain necessary information from the first application 330 (e.g., a web page providing weather information).

According to an embodiment, the postprocessor 335 may perform postprocessing on the natural language-based response generated by the generative model 325. For example, the postprocessor 335 may add characters (e.g., emoticons) or remove unnecessary words or sentences.

According to an embodiment, the generative model 325 may generate data for performing an action corresponding to a user utterance. Herein, the action may refer to a task performed by an application (e.g., an application, a widget, a domain, or a web page), other than the generative model 325, using a function (e.g., an API or a deep link). For example, the generative model 325 may generate data for invoking a function of the second application 345 (e.g., a weather application) related to the user utterance (e.g., "How is the weather today"). The user utterance processing system 300 may obtain, using the data generated by the generative model 325, data (e.g., image data such as a weather card) corresponding to the user utterance from the second application 345.

According to an embodiment, the capsule 340 may include files and/or data necessary for interaction between the user utterance processing system 300 and the second application 345.

According to an embodiment, the user utterance processing system 300 may provide the final response 35 including the data obtained via the action (e.g., image data such as a 'weather card' obtained via the second application 345) and the natural language-based response.

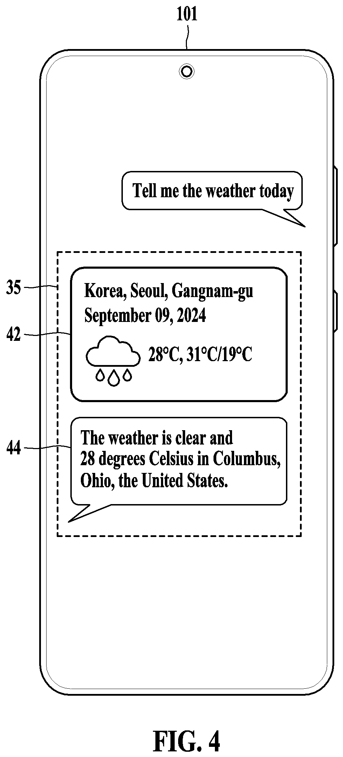

FIG. 4 is a diagram illustrating a final response provided by a user utterance processing system, according to an embodiment.

Referring to FIG. 4, according to an embodiment, the electronic device 101 may provide the final response 35 to a user utterance using the user utterance processing system 300. For example, when the electronic device 101 detects the user utterance "Tell me the weather today," the electronic device 101 may generate the final response 35 using the user utterance processing system 300. The final response 35 may include an action-based response 42 obtained via an action and an output 44 (e.g., a natural language-based response) of a generative model (e.g., the generative model 325 of FIG. 3).

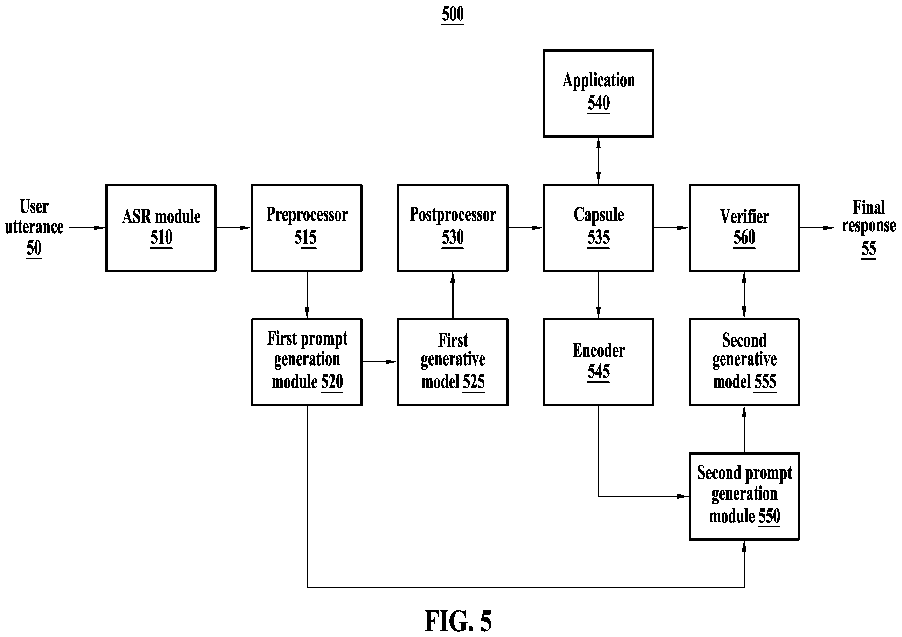

According to an embodiment, the user utterance processing system 300 may generate data for an action (e.g., data for interaction with the second application 345 of FIG. 3) and the natural language-based response in parallel using a single generative model (e.g., the generative model 325 of FIG. 3) so that the action-based response 42 may not match the natural language-based response 44. For example, the current location of a user for the first application 330 may be set to a city in the United States, and the current location of the user for the second application 345 may be set to a city in Korea. In such a case, the action-based response 42 corresponding to the user utterance "Tell me the weather today" may provide weather information regarding a city in Korea (e.g., Seoul, Gangnam-gu), while the natural language-based response 44 may provide weather information regarding a city in the United States (e.g., Columbus, Ohio). The electronic device 101 may process the user utterance using a user utterance processing system (e.g., a user utterance processing system 500 of FIG. 5) capable of preventing inconsistency between pieces of information included in the final response 35.

FIG. 5 is a diagram illustrating a user utterance processing system according to an embodiment.

Referring to FIG. 5, according to an embodiment, a user utterance processing system 500 may obtain a user utterance 50 (e.g., a speech utterance and/or a text utterance) and provide a final response 55 corresponding to the user utterance. For example, the user utterance processing system 500 may visually and/or audibly provide a user with the final response, "It's currently raining," to the user utterance, "Tell me the current weather."

According to an embodiment, the user utterance processing system 500 may include one or more components 510 to 560. The components 510 to 560 may be software modules implemented on an electronic device (e.g., the electronic device 101 of FIG. 1) or a server (e.g., the server 108 of FIG. 1). The components 510 to 560 are illustrated as examples to describe the user utterance processing system 500. Accordingly, the user utterance processing system 500 may include various variations of the components 510 to 560 as long as the operations of the user utterance processing system 500 described herein may be implemented. For example, two or more components may be combined, or one or more components may be added or omitted. Alternatively, the user utterance processing system 500 may further include one or more components among components (e.g., the components 210 to 250 of FIG. 2) of a generative AI system (e.g., the generative AI system 200 of FIG. 2).

According to an embodiment, the user utterance processing system 500 may include an ASR module 510 (e.g., the ASR module 310 of FIG. 3), a preprocessor 515 (e.g., the preprocessor 315 of FIG. 3), a first prompt generation module 520, a first generative model 525 (e.g., the generative model 250 of FIG. 2), a postprocessor 530 (e.g., the postprocessor 335 of FIG. 3), a capsule 535 (e.g., the capsule 340 of FIG. 3), an encoder 545, a second prompt generation module 550, a second generative model 555 (e.g., the generative model 250 of FIG. 2), and a verifier 560.

According to an embodiment, the ASR module 510 may convert a speech signal (e.g., an analog signal) into text data. When the user utterance is a text utterance, the operation of the ASR module 510 may be omitted.

According to an embodiment, the preprocessor 515 may perform preprocessing on the text data. For example, the preprocessor 515 may perform tokenization to split text into tokens (e.g., words, phrases, and/or symbols). For example, the preprocessor 515 may remove unnecessary characters (e.g., characters such as '!' or '?') to generate the final response 55 from the text.

According to an embodiment, the first prompt generation module 520 may generate a prompt for the first generative model 525. The first prompt generation module 520 may generate the prompt for the first generative model 525 based on text (e.g., 'Tell me the current weather') corresponding to the user utterance 50 and information related to a function of an application 540 corresponding to the user utterance 50. The information related to the function of the application 540 may include a function identifier (e.g., a function name), a function description, and/or a function instruction. The function identifier may provide information for identifying a function. The function description may provide information regarding the purpose and/or behavior of a function so that the first generative model 525 may select a function required to process the user utterance 50. The function instruction may provide information regarding a time point to invoke a function, a method of invoking a function, and/or whether two or more functions are linked to each other.

According to an embodiment, the first prompt generation module 520 may send, to the second prompt generation module 550, the text (e.g., 'Tell me the current weather') corresponding to the user utterance 50, the function identifier (e.g., a function name), and/or constraints on the format of an output (e.g., a natural language-based response) of the second generative model 555. The second prompt generation module 550 may generate a prompt of the second generative model 555 using the information and/or the data received from the first prompt generation module 520.

According to an embodiment, the first generative model 525 may generate data necessary to perform an action corresponding to the user utterance 50. For example, the first generative model 525 may generate data for invoking the function of the application 540 related to the prompt generated by the first prompt generation module 520. For example, when the user utterance is an utterance to obtain information regarding the weather, such as "Tell me the current weather," the first generative model 525 may generate data for invoking a function necessary to obtain weather information from a weather application.

According to an embodiment, when a plurality of functions is required to perform an action related to the user utterance, the first generative model 525 may generate data to correlate the plurality of functions.

According to an embodiment, the first generative model 525 may perform semantic inference based on the information (e.g., a function description) included in the prompt.

According to an embodiment, the first generative model 525 may be a large generative model. The first generative model 525 may be a cloud-based model implemented on a server (e.g., the server 108 of FIG. 1) but is not limited thereto. For example, the first generative model 525 may be an on-device model implemented on an electronic device (e.g., the electronic device 101 of FIG. 1). The user utterance processing system 500 may use the data (e.g., data for an action) generated by the first generative model 525 to obtain various types (or data modalities) of data (e.g., text data, image data, audio data, and/or video data) corresponding to the user utterance via the application 540. For example, the user utterance processing system 500 may obtain image data, such as a weather card corresponding to the user utterance "Tell me the current weather," from a weather application.

According to an embodiment, the postprocessor 530 may perform postprocessing on the data generated by the first generative model 525.

According to an embodiment, the capsule 535 may include files and/or data necessary for interaction between the user utterance processing system 500 and the application 540. The capsule 535 may send the data obtained via the application 540 to the encoder 545 and/or the verifier 560. For example, the capsule 535 may send the weather card obtained from the weather application to the encoder 545 and/or the verifier 560.

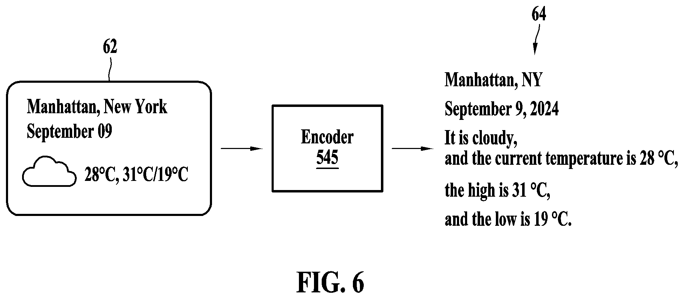

According to an embodiment, the encoder 545 may generate new data from the data obtained via the application 540. For example, the encoder 545 may generate, based on the features of image data (e.g., input data), text data (e.g., output data) that describes or illustrates the image data. The operation of the encoder 545 will be described in detail below with reference to FIG. 6.

According to an embodiment, the encoder 545 may be configured to generate a new type of output data based on input data. For example, the encoder 545 may be a neutral network-based encoder (e.g., a trained neural network-based encoder).

According to an embodiment, the second prompt generation module 550 may generate the prompt of the second generative model 555 based on data generated by the encoder 545 and data (e.g., a function name, text corresponding to the user utterance 50, and/or constraints on the format of an output of the second generative model 555) received from the first prompt generation module 520.

According to an embodiment, the second generative model 555 may generate new data (e.g., text data, image data, audio data, and/or video data) based on the prompt generated by the second prompt generation module 550. Since the second generative model 555 may generate new data based on a prompt including information regarding the data (e.g., image data such as a weather card) obtained from the application 540, the second generative model 555 may generate an output (e.g., a natural language-based response) that matches the data obtained from the application 540.

According to an embodiment, the second generative model 555 may be a generative model that is smaller than the first generative model 525 but is not limited thereto. For example, FIG. 5 illustrates the first generative model 525 and the second generative model 555 as two different models, but the second generative model 555 and the first generative model 525 may be implemented as a single generative model (not shown). For example, the first generative model 525 and the second generative model 555 may be different sub-models included in a single generative model (not shown). In this case, the first generative model 525 may be a sub-model that is larger than the second generative model 555. In another example, a single generative model (not shown) may perform, based on an input, one or more of the operations of the first generative model 525 and the operations of the second generative model 555.

According to an embodiment, the second generative model 555 may be an on-device model implemented on an electronic device (e.g., the electronic device 101 of FIG. 1) but is not limited thereto. For example, the first generative model 525 may be a cloud-based model implemented on a server (e.g., the server 108 of FIG. 1).

According to an embodiment, the verifier 560 may determine a relevance between the output (e.g., a natural language-based response) of the second generative model 555 and the data obtained via the application 540. For example, the verifier 560 may calculate a score indicating the degree of matching based on the features of each of the two pieces of data and determine that the two pieces of data match each other when the calculated score satisfies a threshold value.

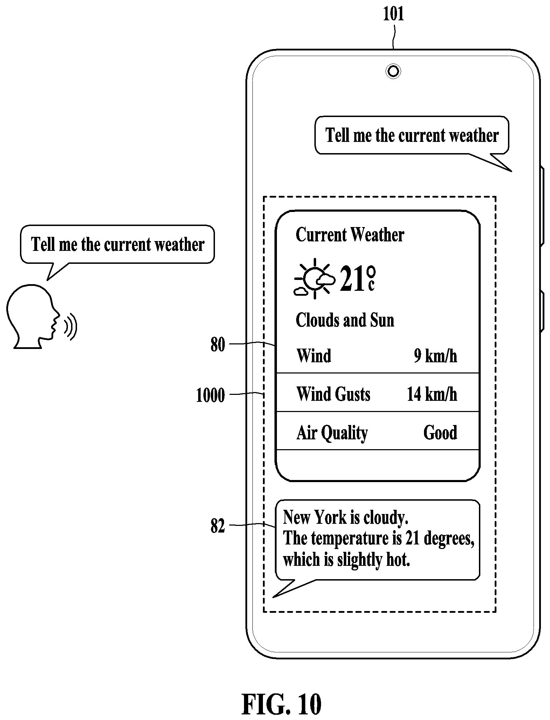

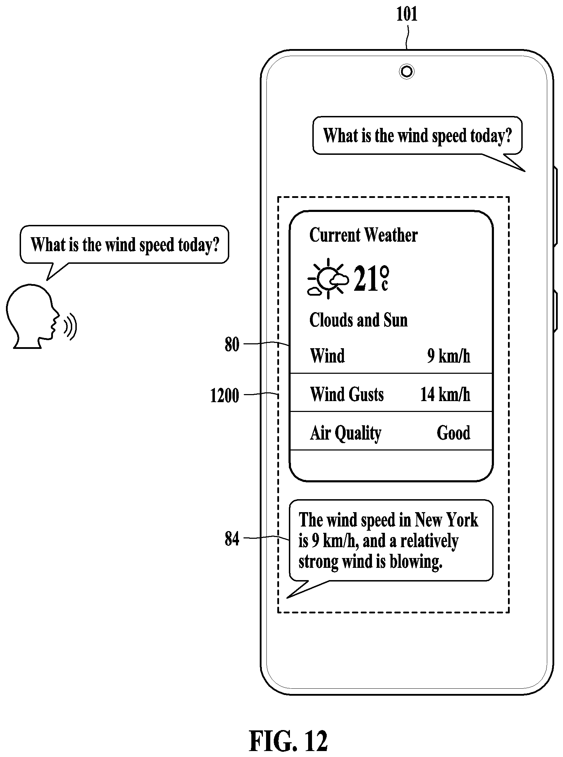

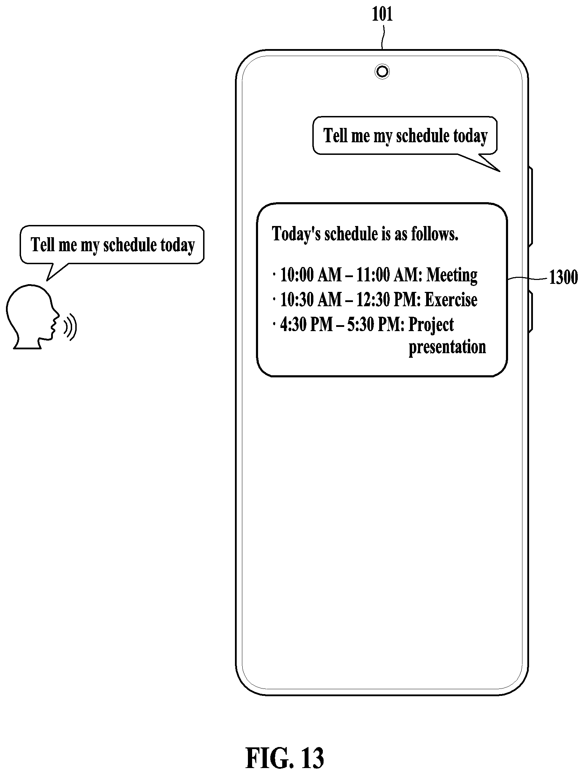

According to an embodiment, when the output (e.g., a natural language-based response) of the second generative model 555 matches the data obtained via the application 540, the verifier 560 may provide the user with the final response 55 (e.g., a final response 1000 of FIG. 10, a final response 1200 of FIG. 12, or a final response 1300 of FIG. 13).

According to an embodiment, when the output (e.g., a natural language-based response) of the second generative model 555 does not match the data obtained via the application 540, the verifier 560 may provide the second generative model 555 with feedback indicating inconsistency. The second generative model 555 may regenerate data (e.g., a natural language-based response) in response to receiving feedback from the verifier 560. To improve the performance of the second generative model 555, reinforcement learning, such as reinforcement learning with human feedback (RLHF), or a feedback technique, such as human-in-the-loop (HITL), may be used.

FIG. 6 is a diagram illustrating an encoder according to an embodiment.

Referring to FIG. 6, according to an embodiment, the encoder 545 may synthesize or generate new data based on data obtained via an application (e.g., the application 540 of FIG. 5), which is related to a user utterance (e.g., the user utterance 50 of FIG. 5).

According to an embodiment, the encoder 545 may generate, from an arbitrary type of input data, a new type of output data including information regarding the input data. For ease of description, FIG. 6 illustrates an example in which the encoder 545 generates text data from image data, but the scope of the present disclosure is not limited thereto.

According to an embodiment, the encoder 545 may generate, based on image data 62 (e.g., a weather card) obtained via a weather application, which is related to the user utterance "Tell me the current weather," text data 64 that describes or illustrates the image data 62. The text data 64 generated by the encoder 545 may be transmitted to a second prompt generation module (e.g., the second prompt generation module 550 of FIG. 5).

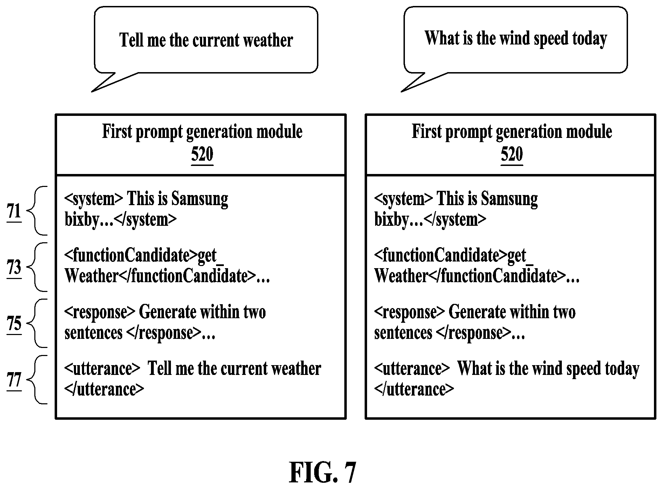

FIG. 7 is a diagram illustrating a prompt according to an embodiment.

Referring to FIG. 7, according to an embodiment, based on a user utterance (e.g., the user utterance 50 of FIG. 5), the first prompt generation module 520 may generate a prompt of a first generative model (e.g., the first generative model 525 of FIG. 5) or send information to the second prompt generation module 550. For example, when the user utterance 50 is "Tell me the current weather" or "What is the wind speed today," the first prompt generation module 520 may include information 77 regarding the user utterance.

According to an embodiment, the first prompt generation module 520 may include a system prompt 71. The system prompt 71 may be set by a user. The system prompt 71 may provide information regarding basic constraints of a user utterance processing system (e.g., the user utterance processing system 500 of FIG. 5). For example, the system prompt 71 may include constraints on information (e.g., information regarding a predetermined topic), constraints on expression (e.g., profanity), and/or a persona of a generative model (e.g., the first generative model 525 and/or the second generative model 555 of FIG. 5) included in the user utterance processing system 500.

According to an embodiment, the first prompt generation module 520 may include information 73 related to a function of an application (e.g., the application 540 of FIG. 5). For example, the information 73 may include a function identifier, such as a function name, a function description, and/or a function instruction. The function identifier, the function description, and the function instruction may be used to generate a prompt of the first generative model 525. The function identifier may be sent to a second prompt generation module (e.g., the second prompt generation module 550 of FIG. 5).

According to an embodiment, the first prompt generation module 520 may include information 75 (e.g., constraints) regarding the format of an output of the second generative model 555. For example, when the second generative model 555 generates a natural language-based response, the information 75 may include constraints that cause the second generative model 555 to generate a natural language-based response of two sentences or less.

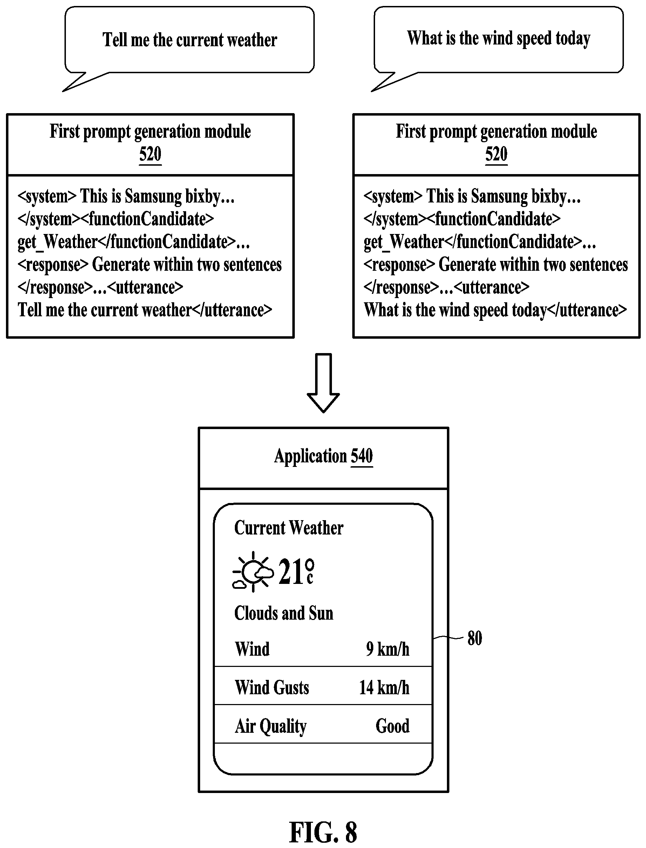

FIG. 8 is a diagram illustrating data obtained via an action, according to an embodiment.

Referring to FIG. 8, according to an embodiment, the first prompt generation module 520 may generate a prompt of a first generative model (e.g., the first generative model 525 of FIG. 5) based on a user utterance (e.g., the user utterance 50 of FIG. 5). For example, since the user utterance "Tell me the current weather" and "What is the wind speed today" are both for obtaining information regarding the weather, the first prompt generation module 520 may generate the prompt using information regarding a function (e.g., get_Weather) of a weather application.

According to an embodiment, the first generative model 525 may generate data for invoking a function of an application (e.g., the application 540 of FIG. 5) based on the prompt. A user utterance processing system (e.g., the user utterance processing system 500 of FIG. 5) may obtain data from the application 540 by invoking the function using the generated data. For example, the user utterance processing system 500 may obtain image data 80, such as a weather card, from a weather application.

FIG. 8 illustrates that the same weather card is obtained for two user utterances, "Tell me the current weather" and "What is the wind speed today," but this is an example for illustrative purposes.

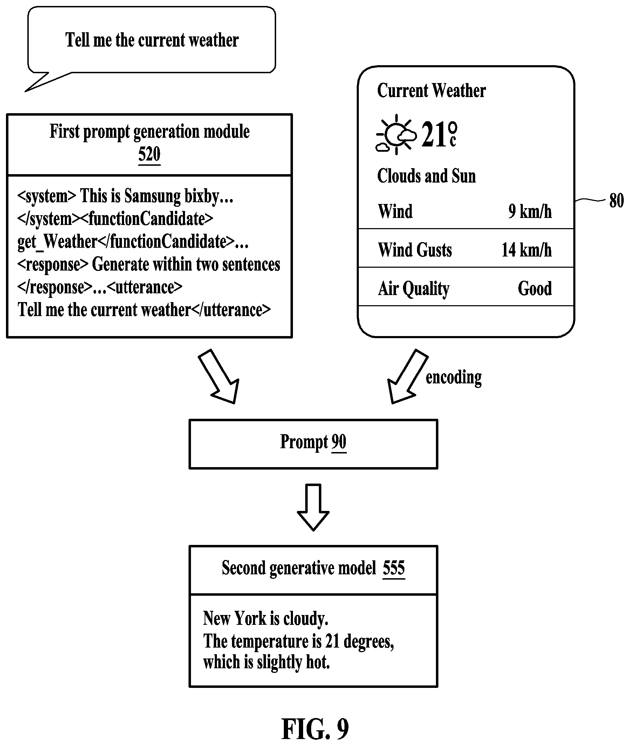

FIGS. 9 and 10 are diagrams illustrating a final response provided by a user utterance processing system, according to an embodiment. FIGS. 9 and 10 may be diagrams illustrating an operation of generating a final response 1100 corresponding to a user utterance "Tell me the current weather."

Referring to FIGS. 9 and 10, according to an embodiment, the electronic device 101 may use a user utterance processing system (e.g., the user utterance processing system 500 of FIG. 5) to generate the final response 1000 corresponding to the user utterance. The final response 1000 may include the data 80 (e.g., image data such as a weather card) obtained via a weather application (e.g., the application 540 of FIG. 5), which is related to the user utterance, and an output 82 (e.g., a natural language-based response) of the second generative model 555.

According to an embodiment, the second generative model 555 may generate, based on a prompt 90, a natural language-based response, "New York is cloudy. The temperature is 21 degrees, which is slightly hot," corresponding to the user utterance. As described above, the prompt 90 may be generated based on the data 80 (e.g., image data such as a weather card) obtained via information and actions received from the first prompt generation module 520. A redundant description thereof will be omitted.

According to an embodiment, the electronic device 101 may provide a user with the final response 1000 including consistent information by obtaining the data 80 from the application 540 using a first generative model (e.g., the first generative model 525 of FIG. 5) and generating the prompt 90 of the second generative model 555 using the data 80.

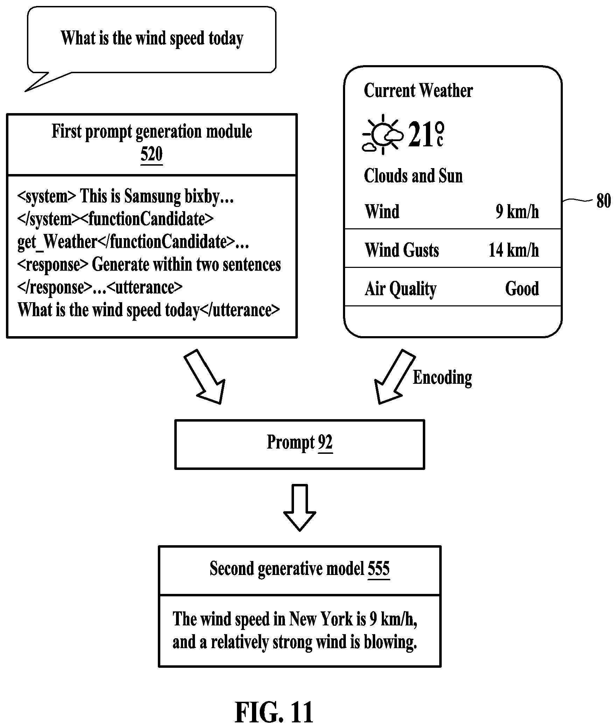

FIGS. 11 and 12 are diagrams illustrating a final response provided by a user utterance processing system, according to an embodiment. FIGS. 11 and 12 may be diagrams illustrating an operation of generating a final response 1200 corresponding to a user utterance "What is the wind speed today?"

Referring to FIGS. 11 and 12, according to an embodiment, the electronic device 101 may use a user utterance processing system (e.g., the user utterance processing system 500 of FIG. 5) to generate the final response 1200 corresponding to the user utterance. The final response 1200 may include the data 80 (e.g., image data such as a weather card) obtained via a weather application (e.g., the application 540 of FIG. 5) corresponding to the user utterance and an output 84 (e.g., a natural language-based response) of the second generative model 555.

According to an embodiment, the second generative model 555 may generate, based on a prompt 92, a natural language-based response, "The wind speed in New York is 9 km/h, and a relatively strong wind is blowing," corresponding to the user utterance. As described above, the prompt 92 may be generated based on the data 80 (e.g., a weather card) obtained via information and actions received from the first prompt generation module 520. A redundant description thereof will be omitted.

According to an embodiment, the electronic device 101 may provide a user with the final response 1200 including consistent information by obtaining the data 80 from the application 540 using a first generative model (e.g., the first generative model 525 of FIG. 5) and generating the prompt 92 of the second generative model 555 using the data 80.

FIG. 13 is a diagram illustrating a final response provided by a user utterance processing system, according to an embodiment. FIG. 13 may be a diagram illustrating an operation of generating a final response 1300 corresponding to a user utterance, "Tell me my schedule today."

Referring to FIG. 13, according to an embodiment, the electronic device 101 may use a user utterance processing system (e.g., the user utterance processing system 500 of FIG. 5) to generate the final response 1300 corresponding to the user utterance.

According to an embodiment, the electronic device 101 may generate a prompt of a second generative model (e.g., the second generative model 555 of FIG. 5) using data corresponding to the user utterance (e.g., image data or structured data including actual schedule information of a user) obtained via a calendar application (e.g., the application 540 of FIG. 4). The electronic device 101 may provide a user with the final response 1300 reflecting the actual schedule information of the user via the second generative model 555.

According to an embodiment, the electronic device 101 may prevent hallucination by sequentially generating data using a first generative model (e.g., the first generative model 525 of FIG. 5) and the second generative model 555. Hallucination may refer to a phenomenon in which a generative model generates fictitious data that is not based on facts.

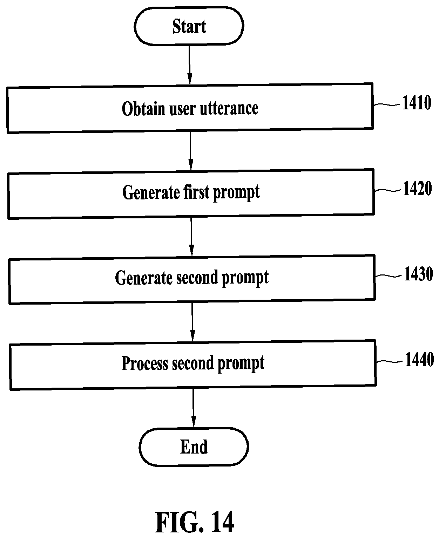

FIG. 14 is a flowchart illustrating the operations performed by an electronic device, according to an embodiment.

Referring to FIG. 14, according to an embodiment, operations 1410 to 1440 may be performed sequentially but are not limited thereto. For example, two or more operations may be performed in parallel. Operations 1410 to 1440 may be substantially the same as the operations performed by an electronic device (e.g., the electronic device 101 of FIG. 1, FIG. 10, FIG. 12, and FIG. 13) described with reference to FIG. 1 and FIGS. 5 to 13. Accordingly, a redundant description thereof will be omitted.

In operation 1410, the electronic device 101 may obtain a user utterance (e.g., the user utterance 50 of FIG. 5).

In operation 1420, the electronic device 101 may generate a first prompt based on the user utterance 50.

In operation 1430, the electronic device 101 may generate a second prompt based on first data for invoking a function of an application (e.g., the application 540 of FIG. 5) related to the first prompt. The first data may be generated based on processing the first prompt using a first generative model (e.g., the first generative model 525 of FIG. 5).

In operation 1440, the electronic device 101 may generate a natural language-based response to the user utterance based on processing the second prompt using a second generative model (e.g., the second generative model 555 of FIG. 5).

The electronic device 101, according to an embodiment, may include the at least one processor 120 and the memory 130 storing instructions.

The instructions, when executed by the at least one processor 120 individually or collectively, may cause the electronic device 101 to obtain a user utterance.

The instructions, when executed by the at least one processor 120 individually or collectively, may cause the electronic device 101 to generate a first prompt based on the user utterance.

The instructions, when executed by the at least one processor 120 individually or collectively, may cause the electronic device 101 to generate a second prompt based on first data for invoking a function of the application 540, which is related to the first prompt.

The instructions, when executed by the at least one processor 120 individually or collectively, may cause the electronic device 101 to generate a natural language-based response to the user utterance by processing the second prompt using the first generative model 555.

The first data may be generated based on processing the first prompt using the second generative model 525.

The first prompt may include at least one of an identifier of the function and a purpose of the function.

The first generative model 555 may be different from the second generative model 525.

The instructions, when executed by the at least one processor 120 individually or collectively, may cause the electronic device 101 to obtain, based on the first data, second data including information corresponding to the first prompt via the application 540.

The instructions, when executed by the at least one processor 120 individually or collectively, may cause the electronic device 101 to generate the second prompt based on the second data.

The instructions, when executed by the at least one processor 120 individually or collectively, may cause the electronic device 101 to generate, based on features of the second data, third data of a data modality that is different from a data modality of the second data.

The instructions, when executed by the at least one processor 120 individually or collectively, may cause the electronic device 101 to generate the second prompt based on the third data and constraints on the format of the natural language-based response.

The second data may include at least one of image data and audio data.

The third data may include text data.

The instructions, when executed by the at least one processor 120 individually or collectively, may cause the electronic device 101 to generate the third data using a trained neural network-based encoder.

The instructions, when executed by the at least one processor 120 individually or collectively, may cause the electronic device 101 to compare the second data with an output of the first generative model 555 generated based on the second prompt.

The instructions, when executed by the at least one processor 120 individually or collectively, may cause the electronic device 101 to provide a user with a final response including the natural language-based response and the second data based on a determination that the natural language-based response matches the second data.

An operating method of the electronic device 101, according to an embodiment, may include obtaining a user utterance.

The operating method may include generating a first prompt based on the user utterance.

The operating method may include generating a second prompt based on first data for invoking a function of the application 540, which is related to the first prompt.

The operating method may include generating a natural language-based response to the user utterance by processing the second prompt using the first generative model 555.

The first data may be generated based on processing the first prompt using the second generative model 525.

The first prompt may include at least one of an identifier of the function and a purpose of the function.

The first generative model 555 may be different from the second generative model 525.

The generating of the second prompt may include obtaining, based on the first data, second data including information corresponding to the first prompt via the application 540.

The generating of the second prompt may include generating the second prompt based on the second data.

The generating of the second prompt based on the second data may include generating, based on features of the second data, third data of a data modality that is different from a data modality of the second data.

The generating of the second prompt based on the second data may include generating the second prompt based on the third data and constraints on the format of an output of the first generative model 555.

The second data may include at least one of image data and audio data.

The third data may include text data.

The generating of the third data may include generating the third data using a neural network-based encoder.

The operating method may further include comparing the second data with the output of the first generative model 555 generated based on the second prompt.

The operating method may further include providing a user with a final response including the natural language-based response and the second data based on a determination that the natural language-based response matches the second data.

The effects to be achieved are not limited to those described above, and other effects not mentioned above will be clearly understood by one of ordinary skill in the art from this document.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include code generated by a complier or code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
at least one processor (120); and
memory (130) storing instructions,
wherein the instructions, when executed by the at least one processor (120) individually or collectively, cause the electronic device (101) to:
obtain a user utterance;
generate a first prompt based on the user utterance;
generate a second prompt based on first data for invoking a function of an application (540), which is related to the first prompt; and
generate a natural language-based response to the user utterance by processing the second prompt using a first generative model (555),
wherein the first data is generated based on processing the first prompt using a second generative model (525).

2. The electronic device (101) of claim 1, wherein the first prompt comprises at least one of an identifier of the function and a purpose of the function.

3. The electronic device (101) of one of claims 1 and 2, wherein the first generative model (555) is different from the second generative model (525).

4. The electronic device (101) of one of claims 1 to 3, wherein the instructions, when executed by the at least one processor (120) individually or collectively, cause the electronic device (101) to:
obtain, based on the first data, second data comprising information corresponding to the first prompt via the application (540); and
generate the second prompt based on the second data.

5. The electronic device (101) of one of claims 1 to 4, wherein the instructions, when executed by the at least one processor (120) individually or collectively, cause the electronic device (101) to:
generate, based on features of the second data, third data of a data modality that is different from a data modality of the second data; and
generate the second prompt based on the third data and constraints on a format of the natural language-based response.

6. The electronic device (101) of one of claims 1 to 5, wherein
the second data comprises at least one of image data and audio data, and the third data comprises text data.

7. The electronic device (101) of one of claims 1 to 6, wherein the instructions, when executed by the at least one processor (120) individually or collectively, cause the electronic device (101) to generate the third data using a neural network-based encoder (545).

8. The electronic device (101) of one of claims 1 to 7, wherein the instructions, when executed by the at least one processor (120) individually or collectively, cause the electronic device (101) to compare the second data with the natural language-based response.

9. The electronic device (101) of one of claims 1 to 8, wherein the instructions, when executed by the at least one processor (120) individually or collectively, cause the electronic device (101) to provide a user with a final response comprising the natural language-based response and the second data based on a determination that the natural language-based response matches the second data.

10. An operating method of an electronic device (101), the operating method comprising:
obtaining a user utterance;
generating a first prompt based on the user utterance;
generating a second prompt based on first data for invoking a function of an application (540), which is related to the first prompt; and
generating a natural language-based response to the user utterance by processing the second prompt using a first generative model (555),
wherein the first data is generated based on processing the first prompt using a second generative model (525).

11. The operating method of claim 10, wherein the first prompt comprises at least one of an identifier of the function and a purpose of the function.

12. The operating method of one of claims 10 and 11, wherein the generating of the second prompt comprises:
obtaining, based on the first data, second data comprising information corresponding to the first prompt via the application (540);
generating, based on features of the second data, third data of a data modality that is different from a data modality of the second data; and
generating the second prompt based on the third data and constraints on a format of an output of the first generative model (555).

13. The operating method of one of claims 10 to 12, wherein
the second data comprises at least one of image data and audio data, and the third data comprises text data.

14. The operating method of one of claims 10 to 13, further comprising:
comparing the second data with the output of the first generative model (555) generated based on the second prompt.

15. The operating method of one of claims 10 to 14, further comprising:
providing a user with a final response comprising the natural language-based response and the second data based on a determination that the natural language-based response matches the second data.
